# EUROPEAN PATENT SPECIFICATION

(11) **EP 3 996 026 B1**
(45) Date of publication and mention of the grant of the patent: **14.05.2025**
(21) Application number: 20206168.5
(22) Date of filing: 06.11.2020
(51) Int. Cl.: G06N 3/08, G06Q 10/063, G06Q 50/06

(54) **SYNTHESIZING ENERGY DATA**
SYNTHESE VON ENERGIEDATEN
SYNTHÈSE DE DONNÉES D'ÉNERGIE

(43) Date of publication of application: 11.05.2022
(73) Proprietor: ABB Schweiz AG, 5400 Baden (CH)
(72) Inventor: GUTERMUTH, Georg, 69115 Heidelberg (DE); PRIMAS, Bernhard, 68165 Mannheim (DE); LENDERS, Felix, 64293 Darmstadt (DE)
(74) Representative: Maiwald GmbH

(56) References cited:
- US-A1- 2005 039 787

## Description

### FIELD OF THE INVENTION

The invention relates to synthesizing energy time-series data for a facility such as an industrial site.

### BACKGROUND

To optimize the electrical energy consumption of an industrial site, it may be useful to have access to detailed time-series data giving regular values (e.g. every 15 minutes) of consumption, cost and/or environmental impact over a certain time period (e.g. one year). However, there are cases in which access to real data is not available for various reasons, such that time-series data must be estimated. For example, a generic or 'typical' time-series may be selected from a database and deemed to be sufficiently similar to the expected consumption profile. However, such a typical time-series is often unavailable. Real consumption data covering a limited time period (e.g. one day or one week) may be taken and repeated to fill a complete year, but doing so typically erases the effect of seasonal trends.

### SUMMARY

There is therefore a need to increase the accuracy of time-series estimates without access to real time-series data of the facility under investigation. This need is met by the subject-matter of the independent claims. Optional features are set forth by the dependent claims.

According to a first aspect, there is provided a system for synthesizing energy time-series data for a facility. The system comprises a time-series generator configured to receive an input set of attributes comprising attributes characterizing the facility, and to output a synthesized time-series representing estimated energy data for the facility. The synthesized time-series may be generated on the basis of the input set of attributes and one or more reference time-series associated with respective reference sets of attributes.

The claimed subject-matter enables a plausible time-series to be generated for a specific facility, requiring only a limited set of key attributes, using a set of example facilities for which the key attributes and the time-series are known. The constructed time-series may have a sufficient granularity and timespan to provide reliability of the result (i.e. the predicted optimization potential). The time-series can be used by an optimizer directly and no additional (e.g. manual) steps may need to be executed. The claimed systems and methods can readily be employed by non-technical experts. The generated time-series can be used for engineering and development of energy management software covering a wider range of examples. The customer does not need to provide detailed data. The claimed subject-matter thus facilitates the estimation of energy cost optimization of a commercial or industrial facility or site.

The time-series generator may synthesize the time-series by directly modifying an existing (e.g. similar) time-series or by synthesizing the time-series from scratch using e.g. a machine learning model. The time-series generator may also be referred to as a time-series generation module.

For example, the time-series generator may comprise a time-series modification module configured to generate the synthesized time-series by modifying the one or more reference time-series, wherein the reference sets of attributes are determined to be similar to the input set of attributes. The time-series modification module may also be referred to as a fitting module.

To facilitate identification of an appropriate time-series for modification, the time-series generator may comprise a reference data acquisition module configured to search one or more databases to retrieve one or more candidate time-series associated with respective candidate sets of attributes, and to select, as the one or more reference time-series, those candidate time-series being associated with candidate sets of attributes which are similar to the input set of attributes. The acquisition module may also be referred to as search and comparison module or a database retrieval module.

Any appropriate determination of similarity may be used. In one example, the reference data acquisition module may be configured to select, as the one or more reference time-series, those candidate time-series being associated with candidate sets of attributes which, when compared to the input set of attributes, yield a similarity metric satisfying a predetermined similarity threshold. The similarity metric may be expressed as a distance metric. Thus, in that example, the reference data acquisition module may be configured to determine the similarity metric for each candidate set of attributes by computing a distance metric representing the distance between the said candidate set of attributes and the input set of attributes. Additionally or alternatively, in that example, the reference data acquisition module may be configured to determine the similarity metric for each candidate set of attributes by inputting the said candidate set of attributes and the input set of attributes as a feature vector to a trained classifier trained to predict, as the target, a similarity metric on the basis of an input feature vector comprising two such sets of attributes.

According to the invention, the one or **more reference** time-series comprise a plurality of reference time-series, the time-series modification module may be configured to modify the reference time-series by calculating a weighted combination of the plurality of reference time-series, and to output the weighted combination as the synthesized time-series. The weighted combination may be determined or calculated for example as cTS = 1/D*Σ[di*eTSi], where the reference sets of attributes eSAi are similar within a distance of di to the input set of attributes cSA, and where D = Σdi. The time-series modification module may be further configured to use an optimization algorithm to find optimal weights for the weighted combination. The weights may represent the customer time-series for example as a linear combination of the multiple reference time-series. In an alternative form of modification, the time-series modification module may be configured to modify the multiple reference time-series by concatenating selected intervals from the plurality of reference time-series, the intervals being selected according to similarity between the reference sets of attributes respectively associated with the plurality of reference time-series and the input set of attributes.

Instead of or as well as modifying a pre-existing time-series, the time-series generator may be configured to generate the synthesized time-series by inputting the input set of attributes to a machine learning model trained to predict the one or more reference time-series on the basis of the respective reference sets of attributes input to the model. The one or more reference time-series may serve as the target to be predicted on the basis of the respective reference sets of attributes input to the model as feature vectors.

Various post-processing steps may be performed to refine the synthesized time-series. In one example, the time-series generator may be further configured to modify the synthesized time-series in a post-processing step to match one or more predetermined key attributes of the facility. For example, the generated energy profile can be rescaled to match the total energy consumption or generation of the facility, or peak and average power. Another possible post-processing step includes adjusting the generated time-series to ensure that load patterns follow production patterns. For example, in which the facility comprises an industrial site, if it is known a priori that production at the site is not running during certain time periods (for example during the night, at off-peak times, or at the weekend), the generated time-series (load profile) can be adjusted by pointwise multiplication with a time-series that is e.g. 1.0 for timepoints at full production and e.g. 0.0 or a small positive value (below a predetermined threshold) for timepoints at off-peak times. Linear interpolation or another suitable interpolation approach may be employed for determining values at timepoints falling during a transition between full and no/limited production.

According to a second aspect, there is provided a method for synthesizing energy time-series data for a facility. The method may comprise receiving an input set of attributes comprising attributes characterizing the facility and outputting a synthesized time-series representing estimated energy data for the facility. The synthesized time-series may be generated on the basis of the input set of attributes and one or more reference time-series associated with respective reference sets of attributes.

According to a third aspect, there is provided a computer program product comprising instructions which, when executed by a computer, enable the computer to carry out the method of the second aspect.

According to a fourth aspect, there is provided a computer-readable medium comprising instructions which, when executed by a computer, enable the computer to carry out the method of the second aspect.

According to another aspect, there is provided a method and/or system for optimizing energy consumption at the facility on the basis of the time-series synthesized as described herein. Known energy consumption optimization methods may be used in this respect.

The term "module" as used herein may be replaced by "system", "circuitry", "tool" according to the specific implementation.

By "attribute" is meant any characteristic or parameter capable of characterizing or specifying the facility and in particular factors relevant to or affecting the energy consumption or generation of the facility. For example, attributes may include any one or more of: a classification of the facility; annual energy consumption or generation at the facility; operation hours; geographic location; equipment used by the facility.

By "facility" is meant a site, building or piece of equipment which consumes and/or generates energy. A facility may thus be described as an energy consumer, an energy generator, or both. The facility may be a non-industrial facility such as a commercial or private facility, e.g. an office building or a household, or an industrial facility, in particular an industrial site such as an industrial plant, especially those including any combination of generators, consumers and storage for electricity. The term "facility" encompasses not only a site, building or piece of equipment as a whole but also individual parts, sections or components thereof.

The terms "generate" and "synthesize" used in the relation to time-series may be replaced by equivalents such as "construct", "build", "fabricate", "create", and so on.

The adjective "reference" in the terms "reference time-series" and "reference set of attributes" appearing herein may be replaced by equivalents such as "example", "existing", "prestored", "template", and so on. The term "input set of attributes" is discussed herein also in terms of "customer site attributes".

The term "candidate" used herein refers in particular to a time-series or set of attributes to be compared with others or subject to selection.

While the time-series in the following examples relate to energy consumption data, the time-series may additionally or alternatively relate to energy generation data. The "energy data" appearing herein may thus be understood as comprising energy consumption data, energy generation data, or both. Equivalent terms such as energy exchange data or energy transfer data may be used. Moreover, although the specific examples given below relate mainly to electrical energy time series, it will be understood that the described systems and methods are equally applicable to other time-series such as heat energy time-series or time-series relating to other entities entirely (such as price, weather, production output, and so on).

The present invention includes one or more aspects, embodiments or features in isolation or in various combinations whether or not specifically stated (including claimed) in that combination or in isolation. Any optional feature or sub-aspect of one of the above aspects applies as appropriate to any of the other aspects.

The above aspects will become apparent from, and be elucidated with reference to, the following detailed description.

### BRIEF DESCRIPTION OF THE DRAWINGS

A detailed description will now be given, by way of example only, with reference to the accompanying drawings, in which:
Figure 1 illustrates a time-series generator;
Figure 2 illustrates one implementation of the time-series generator of figure 1;
Figure 3 illustrates a further implementation of the time-series generator of figure 1;
Figures 4A-4D illustrate various exemplary time-series;
Figures 5A and 5B illustrate the use of neural networks in generating a time-series; and
Figure 6 illustrates a computing device that can be used in accordance with the systems and methods disclosed herein.

### DETAILED DESCRIPTION

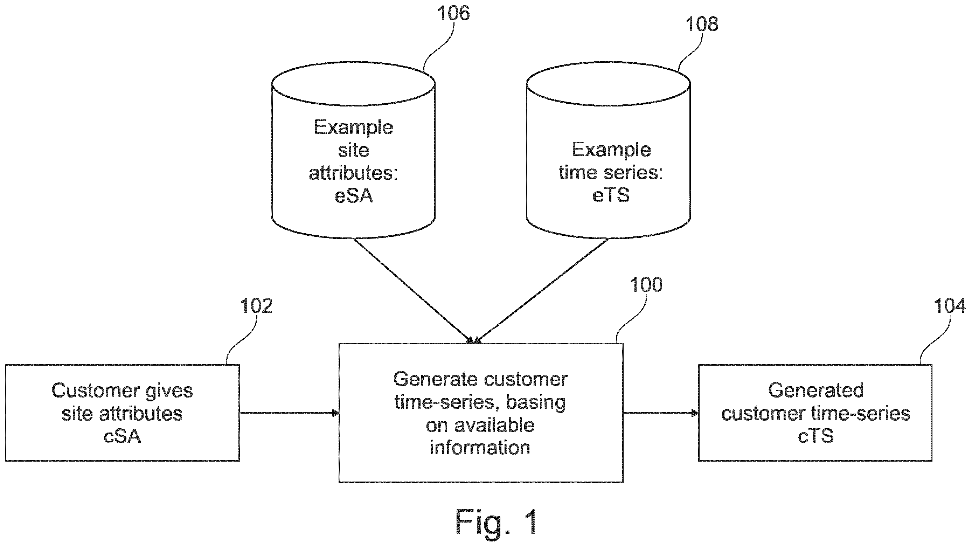

Figure 1 illustrates a time-series generator 100 configured to generate an energy time-series from key attributes of a site. The time-series generator 100 receives, as input, customer site attributes (cSA) 102 comprising important attributes of the site in question. The time-series generator 100 is configured to generate or synthesize a customer time-series (cTS) 104 for the site based on the customer site attributes 102 in conjunction with existing site attributes (eSA) 106 and respective existing time-series (eTS) 108 provided by one or more databases.

Examples of site attributes 102, 106 include one or more of: classification of the site (e.g. discrete manufacturing, commercial retail, food production, and so on); the annual site energy consumption (e.g. 5GWh); site-operation hours (e.g. given by operation days per week and daily shifts); the geographic location of the site (e.g. country or GPS-coordinates); equipment used by the site (e.g. battery, photo-voltaic, etc.).

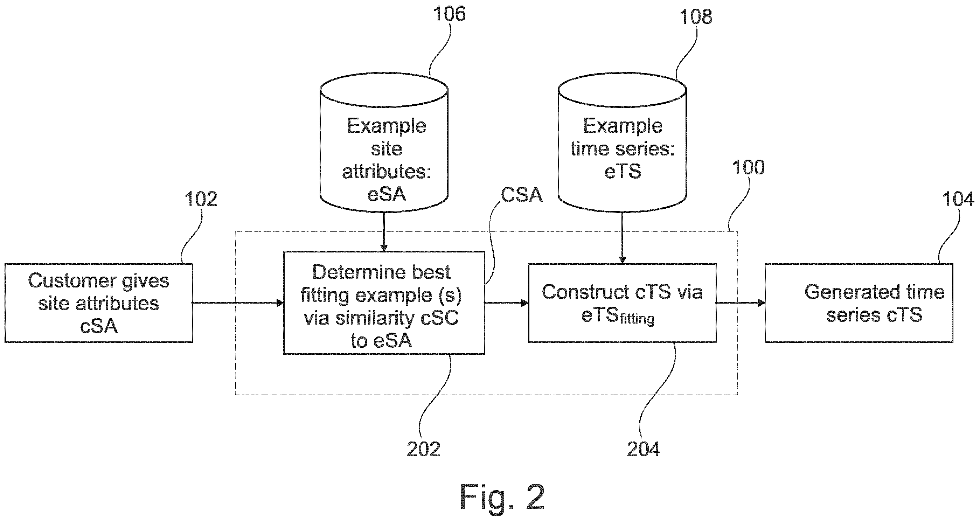

Figure 2 illustrates one implementation of the time-series generator of figure 1 in which the time-series generator 100 is configured to synthesize a time-series by directly modifying one or more existing similar time-series 108. In other words, the time-series generator 100 is configured to generate the customer time-series 104 using a mapping from site attributes to time-series. In one example, the example site attributes 106 are clustered by using for example the k nearest neighbours, principal component analysis for dimension reduction (taking e.g. only the 5 components giving the largest variance contribution), and subsequent k nearest neighbouring. The example time-series 108 are also clustered by a time-series clustering algorithm such as k nearest neighbours, multivariate principal component analysis, or by using the absolute value of the Pearson correlation coefficient if this is above a predetermined threshold (e.g. |correlation| >= 0.5). Other suitable clustering methods are also envisaged by the present disclosure. To generate the customer time-series 104, the site attribute cluster corresponding to the customer site attributes 102 is determined (for example, based on similarity, as described below), and the example time-series 108 which are selected as modification candidates for generating the customer time-series 104 include a first set comprising those example time-series 108 that are associated with example site attributes 106 in the determined site attribute cluster and optionally also a second set comprising example time-series 108 found in the same time-series cluster(s) as those in the first set.

The time-series generator 100 comprises a reference data acquisition module 202 configured to search the database of existing site attributes 106 to identify those entries (which may be clustered in the above-described manner) which are most similar to the customer site attributes 102. The reference data acquisition module 202 is configured to compute the similarity between the customer site attributes 102 and one or more candidate sets of example site attributes 106 in the database in one or more of the following ways: a) by defining a suitable distance metric that measures the distance between two sets of attributes (represented as a vector in a multi-dimensional space); b) by using machine learning classification methods.

The time-series generator 100 further comprises a time-series modification module 204 configured to construct, using the identified sets of similar example site attributes 106, one or more corresponding customer time-series 104. Taking the sets of example site attributes eSAi 106 as being similar within a distance of 1/di to the customer site attributes cSA 102, where D=Σdi, the customer time-series 104 can be constructed for example using one or more of the following approaches.

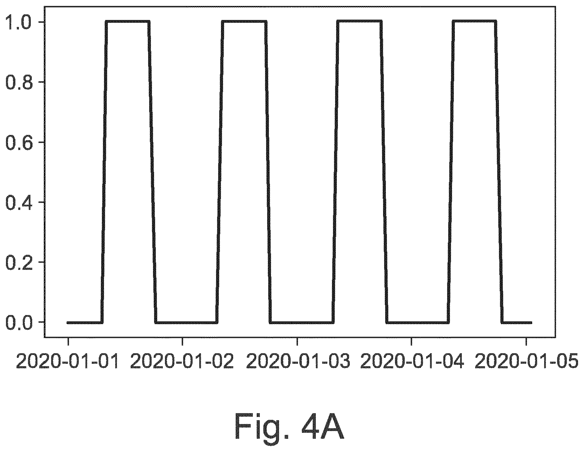

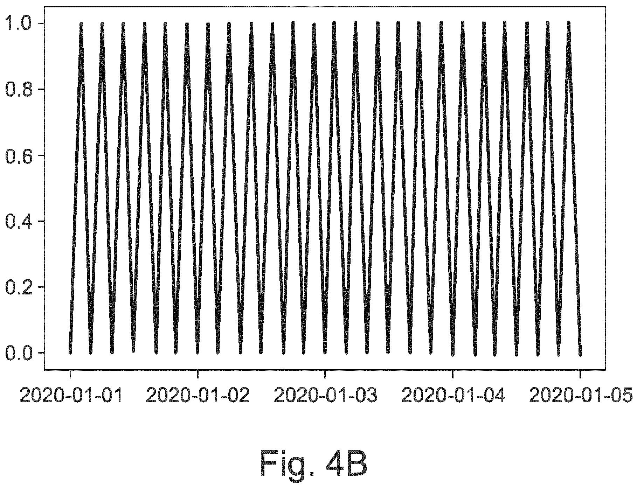

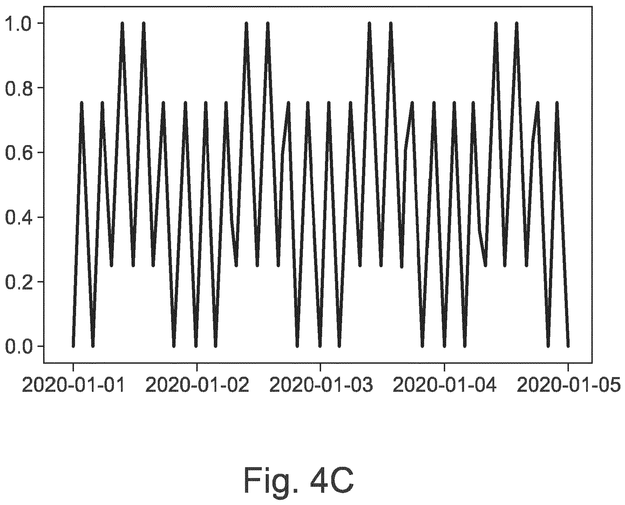

With reference to figures 4A-C, a first approach calculates a weighted combination of the relevant example time-series, e.g. cTS=1/D*Σ[di*eTSi]. Figure 4A shows one example of an example time-series 108 for a site at which a load has a day/night pattern. Figure 4B shows a further example of an example time-series 108 for a site at which the load is periodically switched on and off (at a frequency higher than that of the daily cycle shown in figure 4A). Figure 4C shows the weighted combination of the time-series of figures 4A and 4B using the weightings d1 = 3, d2 = 1.

A general post-processing step, in the case that several key characteristics have to be satisfied, may comprise formulating an optimization problem to find the best fitting weights that represents the customer time-series 104 as a linear combination of the example time-series 108. The optimization problem may render unnecessary the performance of post-processing steps to ensure that certain characteristics are satisfied, with these being included rather as constraints in the optimization problem. For example, instead of using a fixed weight (e.g. di) in the linear combination of the example time-series, the optimization problem can be formulated as follows: Minimize ∥ (t1-d1, t2-d2, ..., tn-dn) ∥_p^p, subject to t1 >= 0, ..., tn >= 0, cTS = Σti*eTSi, total energy consumption of cTS = given total energy consumption, while satisfying any further key characteristics. The optimization variable is given by t1, ..., tn. Here, ∥ ∥_p denotes the p-norm of vectors, where typically p = 2 or p = 1. In other words, this optimization problem reads: find the set of coefficients ti that is closest in the p-norm sense to di such that a positive linear combination cTS = Σti*eTSi matches the total energy consumption of the customer site.

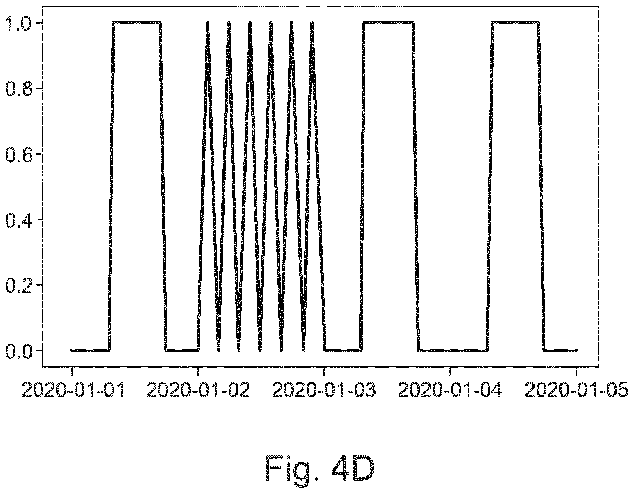

A second approach is to take only a predetermined number, e.g. 3, of the most similar sites (according to the similarity of the site attributes, as discussed above) and to concatenate different intervals from the various example time-series 108 associated with the selected sites. Here, rather than using a linear combination of the example time-series 108, the various example time-series 108 are used to generate the customer time-series 104 by concatenation of selected intervals of the different example time-series 108. The above-described similarity metrics may be used to determine the relative proportions of the different intervals which are selected from the various example time-series 108. For example, the weights di may be used to select the proportions of the time intervals. An example is shown in figure 4D: The similarity of the attributes of the site under investigation was found to be high (d_{A}=3) with example A (Fig. 4A) and medium (d_{B}=1) with example B (Fig. 4B). This is translated into a resulting time-series (Fig. 4D) that is a concatenation of 3 days of exampleSite A and one day of exampleSite B, randomly put as the second day of Fig. 4D.

In a post-processing step, the constructed data can be made more accurate by forcing it to exactly match key-characteristics of the customer site. For example, the generated load profile can be rescaled to match the total energy consumption of the site more closely.

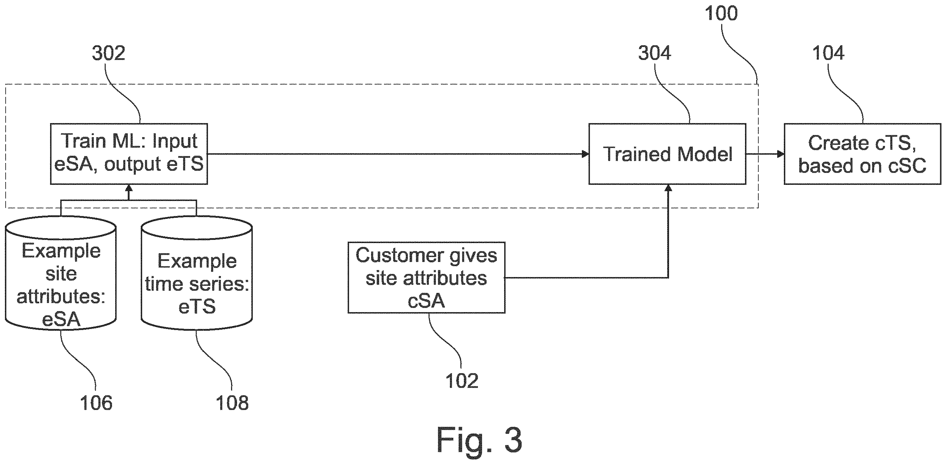

Figure 3 illustrates a further implementation of the time-series generator of figure 1 in which the time-series generator 100 comprises a trained model 304 (for example a neural network or recurrent neural network) trained with a sufficient number of example site attributes and corresponding example time-series from the database as features, with the goal being to construct time-series that are similar to the example time-series based on a given set of site attributes. The trained model 304 is used to generate the customer time-series 104 from the specified customer site attributes 102. The time-series generator 302 optionally also comprises a model training module 302 configured to train the model 304 on the basis of the example site attributes 106 and examples time-series 108. Alternatively a preprovided model 304 may be used.

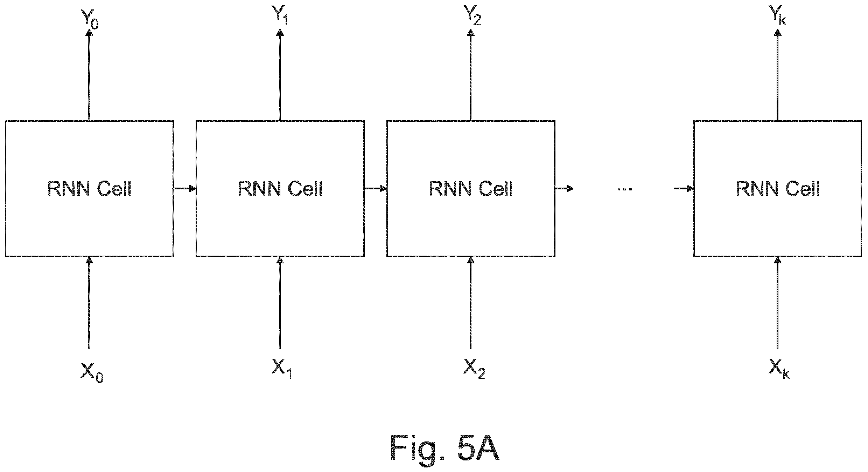

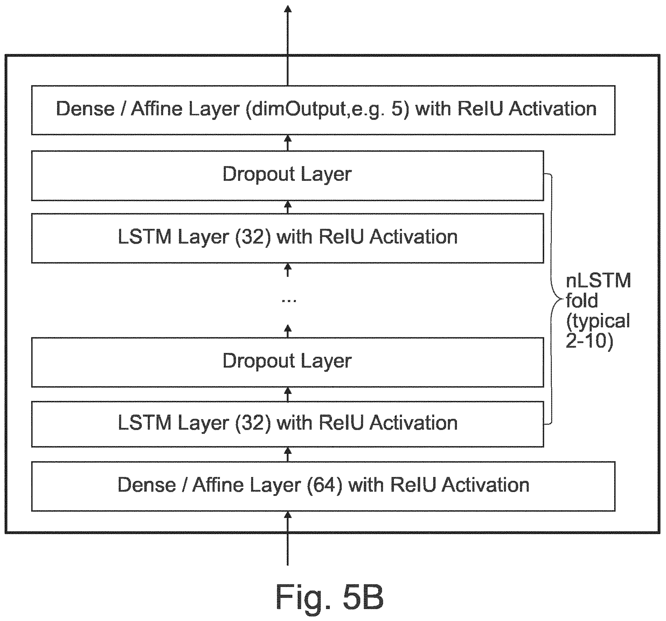

Figures 5A and 5B show an exemplary topology of such a recurrent neural network (RNN). The RNN predicts the next value of the customer time-series 104 given the current value of the time-series and the customer site attributes 102. The first value of the customer time-series 104 can be taken as a random number inside suitable bounds. For example, suitable bounds for a load profile may comprise 0 MW as the lower bound and 1 MW as the upper bound for a small industrial site. The bounds may be included as part of the site attributes or may be inferred from the site attributes. Training of such a neural network may be performed by learning the example site attributes 106 and example time-series 108 as input against the shifted example time-series 108 as output, where by "shifted" it is understood that all values are shifted one timestep into the future. In addition, the input example time-series 108 may be truncated such that the last timepoint is removed. Training can be done using one or more of the following exemplary approaches: mean squared error (MSE) as loss function; L2 regularization of neural network weights; any suitable variant of the stochastic gradient descent algorithm such as the Adaptive Moment Estimation Algorithm (Adam) for loss minimization; hyperoptimization with random sampling of the learning rate parameter (typical values in the range of 10⁻⁵ to 10⁻¹), the L2 regularization parameter (typical values in the range 10⁻⁸ to 10⁻¹), and parameters defining the number of hidden layers and size of units in the network layers (typical values are shown in figure 5B but can be varied for example in the range of a factor of 10 smaller/larger and may be a power of 2).

In a variant, generative adversarial networks may be used to generate the customer time-series 104 using machine learning methods.

It will be understood that the above disclosure having been provided in relation to commercial/industrial sites is not so limited and that it may be applicable to the generation of any energy time-series.

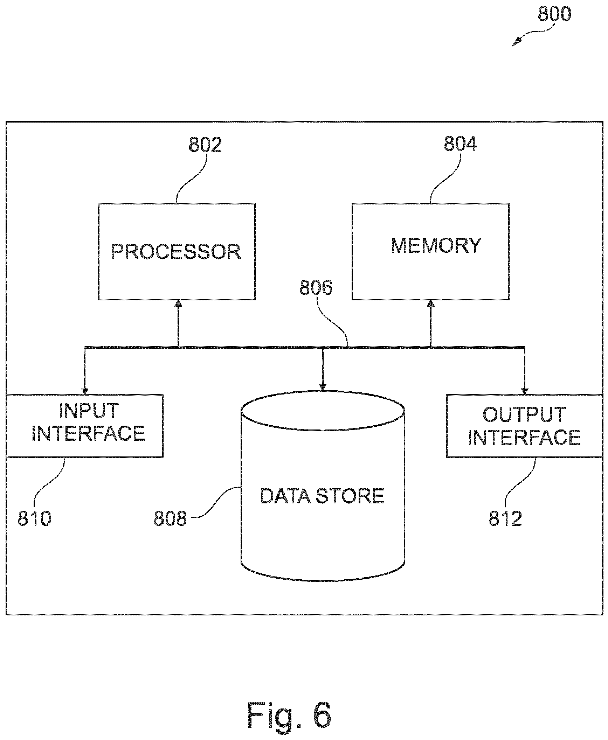

Referring now to figure 6, a high-level illustration of an exemplary computing device 800 that can be used in accordance with the systems and methods disclosed herein is illustrated. The computing device 800 includes at least one processor 802 that executes instructions that are stored in a memory 804. The instructions may be, for instance, instructions for implementing functionality described as being carried out by one or more components discussed above or instructions for implementing one or more of the methods described above. The processor 802 may access the memory 804 by way of a system bus 806. In addition to storing executable instructions, the memory 804 may also store conversational inputs, scores assigned to the conversational inputs, etc.

The computing device 800 additionally includes a data store 808 that is accessible by the processor 802 by way of the system bus 806. The data store 808 may include executable instructions, log data, etc. The computing device 800 also includes an input interface 810 that allows external devices to communicate with the computing device 800. For instance, the input interface 810 may be used to receive instructions from an external computer device, from a user, etc. The computing device 800 also includes an output interface 812 that interfaces the computing device 800 with one or more external devices. For example, the computing device 800 may display text, images, etc. by way of the output interface 812.

It is contemplated that the external devices that communicate with the computing device 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 800 may be a distributed system. Thus, for instance, several devices may be in communication by way of a network connection and may collectively perform tasks described as being performed by the computing device 800.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fibre optic cable, twisted pair, digital subscriber line (DSL), or wireless technologies such as infrared, radio, and microwave, then the coaxial cable, fibre optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the following claims.

## Claims

1. A system for synthesizing energy time-series data for a facility which consumes and/or generates energy, the system comprising:
a time-series generator (100) configured to receive an input set of attributes (102) comprising attributes characterizing the facility, and to output a synthesized time-series (104) representing estimated energy data for the facility, the synthesized time-series being generated on the basis of the input set of attributes (102) and one or more reference time-series (108) associated with respective reference sets of attributes (106), **characterized in that** the time-series generator (100) comprises a time-series modification module (204) configured to generate the synthesized time-series (104) by modifying the one or more reference time-series, wherein the reference sets of attributes are determined to be similar to the input set of attributes,
wherein the one or more reference time-series comprise a plurality of reference time-series (108), and wherein the time-series modification module (204) is configured to modify the reference time-series by either i) calculating a weighted combination of the plurality of reference time-series and outputting the weighted combination as the synthesized time-series (104), or ii) concatenating selected intervals from the plurality of reference time-series, the intervals being selected according to similarity between the reference sets of attributes respectively associated with the plurality of reference time-series and the input set of attributes.

2. The system of claim 1, wherein the time-series generator (100) comprises a reference data acquisition module (202) configured to search one or more databases to retrieve one or more candidate time-series associated with respective candidate sets of attributes, and to select, as the one or more reference time-series (108), those candidate time-series being associated with candidate sets of attributes which are similar to the input set of attributes (102).

3. The system of claim 2, wherein the reference data acquisition module (202) is configured to select, as the one or more reference time-series (108), those candidate time-series being associated with candidate sets of attributes which, when compared to the input set of attributes (102), yield a similarity metric satisfying a predetermined similarity threshold.

4. The system of claim 3, wherein the reference data acquisition module (202) is configured to determine the similarity metric for each candidate set of attributes by computing a distance metric representing the distance between the said candidate set of attributes and the input set of attributes (102).

5. The system of claim 3, wherein the reference data acquisition module (202) is configured to determine the similarity metric for each candidate set of attributes by inputting the said candidate set of attributes and the input set of attributes (102) as a feature vector to a trained classifier trained to predict, as the target, a similarity metric on the basis of an input feature vector comprising two such sets of attributes.

6. The system of claim 1, wherein the time-series modification module (204) is further configured to use an optimization algorithm to find optimal weights for the weighted combination.

7. The system of any preceding claim, wherein the time-series generator (100) is further configured to modify the synthesized time-series (104) in a post-processing step to match one or more predetermined key attributes of the facility.

8. The system of claim 7, wherein the post-processing step comprises rescaling the synthesized time-series (104) to match one or more of: a total energy consumption of the facility; a total energy generation of the facility; a peak power of the facility; an average power of the facility.

9. The system of claim 7 or 8, wherein the post-processing step comprises adjusting the synthesized time-series (104) so that its load pattern follows a production pattern of the facility.

10. The system of any preceding claim, wherein attributes include one or more of: a classification of the facility; annual energy consumption or generation at the facility; operation hours; geographic location; equipment used by the facility.

11. A method for synthesizing energy time-series data for a facility which consumes and/or generates energy, the method comprising:
receiving an input set of attributes (102) comprising attributes characterizing the facility, and **characterized in that** it comprises the steps of:
outputting a synthesized time-series (104) representing estimated energy data for the facility, the synthesized time-series being generated on the basis of the input set of attributes (102) and one or more reference time-series (108) associated with respective reference sets of attributes (106), wherein the synthesized time-series (104) is generated by modifying the one or more reference time-series, wherein the reference sets of attributes are determined to be similar to the input set of attributes,
wherein the one or more reference time-series comprise a plurality of reference time-series (108), and wherein modifying the reference time-series comprises either i) calculating a weighted combination of the plurality of reference time-series and outputting the weighted combination as the synthesized time-series (104), or ii) concatenating selected intervals from the plurality of reference time-series, the intervals being selected according to similarity between the reference sets of attributes respectively associated with the plurality of reference time-series and the input set of attributes.

12. A computer program product comprising instructions which, when executed by a computer, enable the computer to carry out the method of claim 11.

13. A computer-readable medium comprising instructions which, when executed by a computer, enable the computer to carry out the method of claim 11.

## Patentansprüche

1. System zur Synthese von Energie-Zeitreihendaten für eine Anlage, die Energie verbraucht und/oder erzeugt, wobei das System umfasst:
einen Zeitreihengenerator (100), der dazu eingerichtet ist, eine Eingabemenge von Attributen (102) zu empfangen, welche die Anlage charakterisierende Attribute umfasst, und eine synthetisierte Zeitreihe (104) auszugeben, die geschätzte Energiedaten für die Anlage darstellt, wobei die synthetisierte Zeitreihe auf Grundlage der Eingabemenge von Attributen (102) und einer oder mehrerer Referenz-Zeitreihen (108), die jeweils mit zugehörigen Referenz-Attributmengen (106) assoziiert sind, erzeugt wird,
**dadurch gekennzeichnet, dass**
der Zeitreihengenerator (100) ein Zeitreihenmodul (204) umfasst, das dazu eingerichtet ist, die synthetisierte Zeitreihe (104) durch Modifikation der einen oder mehrerer Referenz-Zeitreihen zu erzeugen, wobei die Referenz-Attributmengen als ähnlich zur Eingabemenge von Attributen bestimmt sind,
wobei die eine oder mehreren Referenz-Zeitreihen eine Vielzahl von Referenz-Zeitreihen (108) umfassen, und wobei das Zeitreihenmodul (204) dazu eingerichtet ist, die Referenz-Zeitreihen zu modifizieren, indem entweder
i) eine gewichtete Kombination der Vielzahl von Referenz-Zeitreihen berechnet und diese gewichtete Kombination als die synthetisierte Zeitreihe (104) ausgegeben wird, oder
ii) ausgewählte Intervalle aus der Vielzahl von Referenz-Zeitreihen miteinander verknüpft werden, wobei die Intervalle entsprechend einer Ähnlichkeit zwischen den jeweiligen Referenz-Attributmengen, die mit der Vielzahl von Referenz-Zeitreihen assoziiert sind, und der Eingabemenge von Attributen ausgewählt werden.

2. System nach Anspruch 1, wobei der Zeitreihengenerator (100) ein Referenzdaten-Erfassungsmodul (202) umfasst, das dazu eingerichtet ist, eine oder mehrere Datenbanken zu durchsuchen, um eine oder mehrere Kandidaten-Zeitreihen abzurufen, die jeweils mit zugehörigen Kandidaten-Attributmengen assoziiert sind, und als die eine oder mehreren Referenz-Zeitreihen (108) diejenigen Kandidaten-Zeitreihen auszuwählen, die mit Kandidaten-Attributmengen assoziiert sind, welche der Eingabemenge von Attributen (102) ähnlich sind.

3. System nach Anspruch 2, wobei das Referenzdaten-Erfassungsmodul (202) dazu eingerichtet ist, als die eine oder mehreren Referenz-Zeitreihen (108) diejenigen Kandidaten-Zeitreihen auszuwählen, die mit Kandidaten-Attributmengen assoziiert sind, welche bei einem Vergleich mit der Eingabemenge von Attributen (102) eine Ähnlichkeitsmetrik ergeben, die einen vorgegebenen Ähnlichkeitsschwellenwert erfüllt.

4. System nach Anspruch 3, wobei das Referenzdaten-Erfassungsmodul (202) dazu eingerichtet ist, die Ähnlichkeitsmetrik für jede Kandidaten-Attributmenge zu bestimmen, indem eine Distanzmetrik berechnet wird, die den Abstand zwischen der jeweiligen Kandidaten-Attributmenge und der Eingabemenge von Attributen (102) repräsentiert.

5. System nach Anspruch 3, wobei das Referenzdaten-Erfassungsmodul (202) dazu eingerichtet ist, die Ähnlichkeitsmetrik für jede Kandidaten-Attributmenge zu bestimmen, indem die jeweilige Kandidaten-Attributmenge und die Eingabemenge von Attributen (102) als Merkmalsvektor einem trainierten Klassifikator zugeführt werden, der darauf trainiert ist, auf Basis eines Eingabemerkmalsvektors, der zwei derartige Attributmengen umfasst, eine Ähnlichkeitsmetrik als Zielwert vorherzusagen.

6. System nach Anspruch 1, wobei das Zeitreihenmodifikationsmodul (204) ferner dazu eingerichtet ist, einen Optimierungsalgorithmus zu verwenden, um optimale Gewichtungen für die gewichtete Kombination zu bestimmen.

7. System nach einem der vorhergehenden Ansprüche, wobei der Zeitreihengenerator (100) ferner dazu eingerichtet ist, die synthetisierte Zeitreihe (104) in einem Nachverarbeitungsschritt zu modifizieren, um sie an eine oder mehrere vorbestimmte Schlüsselattribute der Anlage anzupassen.

8. System nach Anspruch 7, wobei der Nachverarbeitungsschritt ein Reskalieren der synthetisierten Zeitreihe (104) umfasst, um sie an einen oder mehrere der folgenden Werte anzupassen: einen Gesamtenergieverbrauch der Anlage; eine Gesamterzeugung von Energie in der Anlage; eine Spitzenleistung der Anlage; eine durchschnittliche Leistung der Anlage.

9. System nach Anspruch 7 oder 8, wobei der Nachverarbeitungsschritt ein Anpassen der synthetisierten Zeitreihe (104) umfasst, sodass deren Lastprofil einem Produktionsmuster der Anlage folgt.

10. System nach einem der vorhergehenden Ansprüche, wobei die Attribute eines oder mehrere der folgenden Merkmale umfassen: eine Klassifikation der Anlage; ein jährlicher Energieverbrauch oder eine jährliche Energieerzeugung in der Anlage; Betriebsstunden; geografische Lage; in der Anlage verwendete Ausrüstung.

11. Verfahren zur Synthese von Energie-Zeitreihendaten für eine Anlage, die Energie verbraucht und/oder erzeugt, das Verfahren umfassend:
Empfangen einer Eingabemenge von Attributen (102), welche Attribute umfasst, die die Anlage charakterisieren, und
**dadurch gekennzeichnet, dass** es ferner folgende Schritte umfasst:
Ausgeben einer synthetisierten Zeitreihe (104), die geschätzte Energiedaten für die Anlage darstellt, wobei die synthetisierte Zeitreihe auf Grundlage der Eingabemenge von Attributen (102) und einer oder mehrerer Referenz-Zeitreihen (108), die jeweils mit zugehörigen Referenz-Attributmengen (106) assoziiert sind, erzeugt wird,
wobei die synthetisierte Zeitreihe (104) durch Modifikation der einen oder mehreren Referenz-Zeitreihen erzeugt wird, wobei die Referenz-Attributmengen als ähnlich zur Eingabemenge von Attributen bestimmt werden,
wobei die eine oder mehreren Referenz-Zeitreihen eine Vielzahl von Referenz-Zeitreihen (108) umfassen, und wobei die Modifikation der Referenz-Zeitreihen entweder
i) das Berechnen einer gewichteten Kombination der Vielzahl von Referenz-Zeitreihen und das Ausgeben dieser gewichteten Kombination als die synthetisierte Zeitreihe (104) oder
ii) das Aneinanderfügen ausgewählter Intervalle der Vielzahl von Referenz-Zeitreihen umfasst,
wobei die Intervalle entsprechend einer Ähnlichkeit zwischen den jeweiligen Referenz-Attributmengen, die mit der Vielzahl von Referenz-Zeitreihen assoziiert sind, und der Eingabemenge von Attributen ausgewählt werden.

12. Computerprogrammprodukt mit Anweisungen, die, wenn sie von einem Computer ausgeführt werden, den Computer veranlassen, das Verfahren nach Anspruch 11 auszuführen.

13. Computerlesbares Medium mit Anweisungen, die, wenn sie von einem Computer ausgeführt werden, den Computer veranlassen, das Verfahren nach Anspruch 11 auszuführen.

## Revendications

1. Système de synthèse de données de séries chronologiques d'énergie pour une installation qui consomme et/ou génère de l'énergie, le système comprenant :
un générateur de séries chronologiques (100) configuré pour recevoir un ensemble **d'attributs d'entrée** (102) comprenant des attributs caractérisant **l'installation,** et pour délivrer en sortie une série chronologique synthétisée (104) représentant des données d'énergie estimées pour l'installation, la série chronologique synthétisée étant générée sur la base de l'ensemble d'attributs d'entrée (102) et d'une ou plusieurs séries chronologiques de référence (108) associées à des ensembles d'attributs de référence respectifs (106), **caractérisé en ce que**
le générateur de séries chronologiques (100) comprend un module de modification de séries chronologiques (204) configuré pour générer les séries chronologiques synthétisées (104) en modifiant les une ou plusieurs séries chronologiques de référence, les ensembles d'attributs de référence étant déterminés comme étant similaires à l'ensemble d'attributs d'entrée,
où les une ou plusieurs séries chronologiques de référence comprennent une pluralité de séries chronologiques de référence (108), et où le module de modification de séries chronologiques (204) est configuré pour modifier les séries chronologiques de référence soit i) en calculant une combinaison pondérée de la pluralité de séries chronologiques de référence et en délivrant en sortie la combinaison pondérée en tant que série chronologique synthétisée (104), soit ii) en concaténant des intervalles sélectionnés parmi la pluralité de séries chronologiques de référence, les intervalles étant sélectionnés en fonction de la similarité entre les ensembles d'attributs de référence respectivement associés à la pluralité de séries chronologiques de référence et à l'ensemble d'attributs d'entrée.

2. Système selon la revendication 1, dans lequel le générateur de séries chronologiques (100) comprend un module d'acquisition de données de référence (202) configuré pour rechercher dans une ou plusieurs bases de données une ou plusieurs séries chronologiques candidates associées à des ensembles candidats respectifs d'attributs, et pour sélectionner, en tant qu'une ou plusieurs séries chronologiques de référence (108), les séries chronologiques candidates associées à des ensembles candidats d'attributs qui sont similaires à l'ensemble d'attributs d'entrée (102).

3. Système selon la revendication 2, dans lequel le module d'acquisition de données de référence (202) est configuré pour sélectionner, en tant qu'une ou plusieurs séries temporelles de référence (108), les séries temporelles candidates associées à des ensembles candidats d'attributs qui, lorsqu'elles sont comparées à l'ensemble d'attributs d'entrée (102), produisent une métrique de similarité satisfaisant à un seuil de similarité prédéterminé.

4. Système selon la revendication 3, dans lequel le module d'acquisition de données de référence (202) est configuré pour déterminer la métrique de similarité pour chaque ensemble candidat d'attributs en calculant une métrique de distance représentant la distance entre ledit ensemble candidat d'attributs et l'ensemble d'attributs d'entrée (102).

5. Système selon la revendication **3,** dans lequel le module **d'acquisition** de données de référence (202) est configuré pour déterminer la métrique de similarité pour chaque ensemble candidat **d'attributs** en entrant ledit ensemble candidat d'attributs et l'ensemble d'attributs **d'entrée** (102) en tant que vecteur de caractéristiques dans un classificateur formé pour prédire, en tant que cible, une métrique de similarité sur la base d'un vecteur de caractéristiques d'entrée comprenant deux de ces ensembles d'attributs.

6. Système selon la revendication 1, dans lequel le module de modification de série chronologique (204) est en outre configuré pour utiliser un algorithme d'optimisation afin de trouver des poids optimaux pour la combinaison pondérée.

7. Système selon l'une quelconque des revendications précédentes, dans lequel le générateur de séries chronologiques (100) est en outre configuré pour modifier les séries temporelles synthétisées (104) dans une étape de post-traitement afin qu'elles correspondent à un ou plusieurs attributs clés prédéterminés de l'installation.

8. Système selon la revendication 7, dans lequel l'étape de post-traitement comprend la remise à l'échelle des séries chronologiques synthétisées (104) afin qu'elles correspondent à un ou plusieurs des éléments suivants : la consommation énergétique totale de l'installation ; la production énergétique totale de l'installation ; la puissance de crête de l'installation ; la puissance moyenne de l'installation.

9. Système selon la revendication 7 ou la revendication 8, dans lequel l'étape de post-traitement comprend l'ajustement des séries chronologiques synthétisées (104) de sorte que son profil de charge suit un profil de production de l'installation.

10. Système selon l'une quelconque des revendications précédentes, dans lequel les attributs comprennent un ou plusieurs des éléments suivants : la classification de l'installation ; la consommation ou la production annuelle d'énergie de l'installation ; les heures de fonctionnement ; l'emplacement géographique ; l'équipement utilisé par l'installation.

11. Procédé de synthèse de données de séries chronologiques d'énergie pour une installation qui consomme et/ou génère de l'énergie, le procédé comprenant les étapes suivantes :
recevoir un ensemble d'attributs d'entrée (102) comprenant des attributs caractérisant l'installation,
et **caractérisé en ce qu'**il comprend les étapes suivantes :
délivrer en sortie une série chronologique synthétisée (104) représentant des données d'énergie estimées pour l'installation, la série chronologique synthétisée étant générée sur la base de l'ensemble d'attributs d'entrée (102) et d'une ou plusieurs séries chronologiques de référence (108) associées à des ensembles d'attributs de référence respectifs (106), où la série chronologique synthétisée (104) est générée en modifiant les une ou plusieurs séries chronologiques de référence, où les ensembles d'attributs de référence sont déterminés comme étant similaires à l'ensemble d'attributs d'entrée,
où les une ou plusieurs séries chronologiques de référence comprennent une pluralité de séries chronologiques de référence (108), et où la modification des séries chronologiques de référence comprend soit i) de calculer une combinaison pondérée de la pluralité de séries chronologiques de référence et en délivrant en sortie la combinaison pondérée en tant que série chronologique synthétisée (104), soit ii) de concaténer des intervalles sélectionnés parmi la pluralité de séries chronologiques de référence, les intervalles étant sélectionnés en fonction de la similarité entre les ensembles d'attributs de référence respectivement associés à la pluralité de séries chronologiques de référence et à l'ensemble d'attributs d'entrée.

12. Produit programme informatique comprenant des instructions qui, lorsqu'elles sont exécutées par un ordinateur, permettent à l'ordinateur de mettre en œuvre le procédé selon la revendication 11.

13. Support lisible par ordinateur comprenant des instructions qui, lorsqu'elles sont exécutées par un ordinateur, permettent à l'ordinateur de mettre en œuvre le procédé selon la revendication 11.
